# EUROPÄISCHE PATENTSCHRIFT

(11) **EP 2 080 736 B1**
(45) Veröffentlichungstag und Bekanntmachung des Hinweises auf die Patenterteilung: **13.01.2016**
(21) Anmeldenummer: 08166593.7
(22) Anmeldetag: 14.10.2008
(51) Int. Cl.: C01B 31/00

(54) **Kohlenstoff-Aerogele, Verfahren zu deren Herstellung und deren Verwendung**
Carbon aerogels, method for their manufacture and application thereof
Aérogels au carbone, leur procédé de fabrication et d'utilisation

(30) Priorität: 17.01.2008 DE 102008005005
(43) Veröffentlichungstag der Anmeldung: 22.07.2009
(73) Patentinhaber: Orion Engineered Carbons GmbH, 60528 Frankfurt am Main (DE)
(72) Erfinder: Maisels, Arkadi, Dr, 63450 Hanau (DE); Stommel, Yves Gorat, Dr., 63450 Hanau (DE); Stenger, Frank, Dr., 63755 Alzenau (DE); Zimmermann, Jutta, Dr., 63755 Alzenau (DE); Dannehl, Manfred, Dr., 63796 Kahl (DE); Mathias, Johann, Dr., 63796 Kahl (DE)
(74) Vertreter: f & e patent

(56) Entgegenhaltungen:
- US-A- 5 508 341
- WU D ET AL: "Low-density organic and carbon aerogels from the sol-gel polymerization of phenol with formaldehyde" JOURNAL OF NON-CRYSTALLINE SOLIDS, NORTH-HOLLAND PHYSICS PUBLISHING. AMSTERDAM, NL, Bd. 351, Nr. 10-11, 15. April 2005 (2005-04-15), Seiten 915-921, XP004844759 ISSN: 0022-3093
- BARRAL K: "Low-density organic aerogels by double-catalysed synthesis" JOURNAL OF NON-CRYSTALLINE SOLIDS, NORTH-HOLLAND PHYSICS PUBLISHING. AMSTERDAM, NL, Bd. 225, Nr. 1-3, 15. April 1998 (1998-04-15), Seiten 46-50, XP004178507 ISSN: 0022-3093
- A. FUNG, G. REYNOLDS, Z. WANG, M. DRESSELHAUS, G. DRESSELHAUS, R. PEKALA: "Relationship between particle size and magnetoresistance in carbon aerogels prepared under different catalyst conditions" JOURNAL OF NON-CRYSTLLINE SOLIDS, Bd. 186, 2. Juni 1995 (1995-06-02), Seiten 200-208, XP002513754
- T. HORIKAWA, J. HAYASHI, K. MUROYAMA: "Size control and characterization of spherical carbon aerogel particles from resorcinol-formaldehyde resin" CARBON, Bd. 42, 2004, Seiten 169-175, XP002513755

## Beschreibung

Die Erfindung betrifft Kohlenstoff-Aerogele, ein Verfahren zu deren Herstellung sowie deren Verwendung.

Aus US 4,997,804 sind organische Aerogele, hergestellt aus Resorcinol-Formaldehyd, Hydrochinon-Resorcinol-Formaldehyd, Phloroglucinol-Resorcinol-Formaldehyd und Catechol-Resorcinol-Formaldehyd, bekannt. Bei diesem Verfahren entstehen makroskopische Formkörper, deren Volumen durch die Reaktorgeometrie bestimmt wird.

Ferner ist aus US 5,508,341 ein Verfahren zur Herstellung von organischen Aerogelen bekannt, wobei eine wässrige organische Phase in Mineralöl gerührt wird, bis die organische Phase zu einem Gel polymerisiert. Die so erhaltenen organischen Aerogele haben eine Partikelgröße von 1 µm bis 3 mm.

Aus WO 02/12380 sind poröse Harze bekannt, die zu mesoporösem Kohlenstoff mit einer Partikelgröße von 2 µm bis 2 mm karbonisiert werden.

Aus WO 01/19904, US6737445 (B2), US6297293 (B1), US2002065333 (A1) sind Verfahren zur Herstellung von monolithischen Polymer- oder Kohlenstoffstrukturen mit definierter Mesoporosität bekannt.

Aus Barral (Journal of Non-Crystalline Solids, Vol. 225, S. 46 - 50, 1998), Wu und Fu (Microporous and Mesoporous Materials, Vol. 96, S. 115-120, 2006) und Wu et al. (Journal of Non-Crystalline Solids 351 (2005) 915-921) ist bekannt, dass die Herstellung monolitischer Polymer- oder Kohlenstoffstrukturen mit definierter Porosität durch einen zweistufigen Prozess (pH-Wertverschiebung statt konstanter pH-Wert) erfolgen kann.

Nachteil der bekannten Kohlenstoff-Aerogele ist die schlechte Dispergierbarkeit, beispielsweise in der Lackanwendung.

Aufgabe der Erfindung ist es, ein Kohlenstoff-Aerogel zur Verfügung zu stellen, das aufgrund seiner Feinteiligkeit eine gute Dispergierbarkeit aufweist.

Gegenstand der Erfindung ist ein Kohlenstoff-Aerogel, welches dadurch gekennzeichnet ist, dass die mittlere Partikelgröße kleiner 1 µm, vorzugsweise zwischen 0,05 und 1 µm, besonders bevorzugt zwischen 0,1 und 1 µm, ganz besonders bevorzugt zwischen 0,5 und 0,95 µm, ist.

Die Bestimmung der mittleren Partikelgröße erfolgt dabei mittels Laserbeugung nach ISO 13320-1(1999). Zur Auswertung des gemessenen Beugungsspektrums wird die Mie-Theorie unter der Annahme kugelförmiger Partikeln herangezogen. Beim eingesetzten Laserbeugungsmessgerät handelt es sich um ein HORIBA LA-920. Zur Analyse von Partikelgrößen < 1 µm ist es notwendig, Informationen über die Beugung in Seiten- und Rückwärtsrichtung zu haben. Aus diesem Grund benutzt das eingesetzte Gerät 13 verschiedene Detektoren, 12 zur Messung in Seiten-und Rückwärtsrichtung sowie über eine Fourier-Linse ein Array aus 75 Photodioden zur Messung in Vorwärtsrichtung. Die eingesetzten Lichtquellen sind eine Wolfram-Lampe (50 W) deren Licht auf 405 nm gefiltert wird sowie ein He-Ne-Laser (0,1 W) mit einer Wellenlänge von 632,8 nm.
Zur Messung wird das Kohlenstoff-Aerogel zunächst in destilliertes Wasser, das mit 0,1 M NaOH auf einen pH-Wert von 9 - 10 eingestellt wurde, mit Hilfe eines Magnetrührers bei Raumtemperatur eingebracht. Die Feststoff-Konzentration beträgt dabei 1 Gew.-%. Die Dispergierung erfolgt in einem wassergekühlten 30 ml Schnappdeckelglas mittels eines Ultraschallfingers (Firma Bandelin, 70 W, 80 Pulsation) für 4,5 Minuten.
In einem weiteren Schritt wird die dispergierte Suspension in die in der Nasszelle im Messgerät vorliegende Dispergierflüssigkeit (destilliertes Wasser mit 0,1 M NaOH auf pH = 9 - 10 eingestellt) tropfenweise eingebracht bis eine Laserabschattung zwischen 5 und 10 % erreicht wird. Das Umpumpen, der nun im Messgerät vorliegenden Suspension, in die Messzelle erfolgt mittels des im Messgerät eingebauten Rührers.
Die Auswertung des Beugungsspektrum erfolgt mittels der Mie-Theorie und einem relativen Brechungsindex von 1,5 und einem Absorptionsindex von 0,3. Die Darstellung der Partikelgrößenverteilung erfolgt als Anzahlverteilung Q₀ durch Umrechnung aus der entsprechenden Volumenverteilung. Als mittlere Partikelgröße wird hier nach ISO 13320-1 der x₅₀ der Q₀ - Verteilung bezeichnet.

Das erfindungsgemäße Kohlenstoff-Aerogel kann eine mittlere fraktale Dimension von 1,0 bis 2,7, vorzugsweise von 1,1 bis 2,5, besonders bevorzugt von 1,2 bis 2,3, haben.

Die mittlere fraktale Dimension des Kohlenstoff-Aerogels wird mittels Bildanalyse von Transmissionselektronenmikroskopie-Aufnahmen gemäß Rogak et al. (Aerosol Science and Technology, Vol. 18, 1993, S. 25 - 47) ermittelt.

Das erfindungsgemäße Kohlenstoff-Aerogel kann eine Dichte von 0,005 - 2,0 g/cm³, vorzugsweise 0,15 - 1,5 g/cm³, besonders bevorzugt 0,35 - 1,3 g/cm³, haben.

Die Dichte des Kohlenstoff-Aerogels wird durch die Bestimmung des spezifischen Porenvolumens bei N₂-Adsorptionsmessungen bestimmt. Ist das spezifische Porenvolumen vₚ aus der N₂-Adsorptionsmessung bekannt, ergibt sich für die Dichte ρ_{C-A} des Kohlenstoff-Aerogels folgender Ausdruck: ρ_{C-A} = 1/(1/ρ_{c} + vp). Für die Dichte des Kohlenstoffs ρ_{C} bzw. für das spezifische Porenvolumen vₚ werden Zahlenwerte entsprechend Dimensionen g/cm³ bzw. cm³/g eingesetzt.

Das erfindungsgemäße Kohlenstoff-Aerogel kann ein Schaum sein.

Der pH-Wert des erfindungsgemäßen Kohlenstoff-Aerogels kann < 7,0, vorzugsweise < 6,0, besonders bevorzugt < 5,0, sein.

Zur Bestimmung des pH-Wertes wird 1 g des Kohlenstoff-Aerogels mit 20 ml entionisiertem, CO₂ freiem Wasser in einem Erlenmeyerkolben versetzt und 1 min auf einem Magnetrührer gerührt. Anschließend wird die Glaselektrode (Hamilton Polilyte Pro 120) des pH-Messgerätes (Titroprozessor 686, Firma Metrohm) ca. 10 mm in die Suspension eingetaucht, dabei wird darauf geachtet, dass die Elektrode weder den gebildeten Bodensatz noch die Gefäßwand berührt. Sobald sich ein konstanter Wert eingestellt hat, wird der pH-Wert abgelesen.

Das erfindungsgemäße Kohlenstoff-Aerogel kann einen STSA-Wert von 20-1300 m²/g, vorzugsweise von 30-1000 m²/g, besonders bevorzugt von 50-800 m²/g, haben.

Die STSA-Messung erfolgt dabei gemäß DIN ISO 9277 (1995).

Das erfindungsgemäße Kohlenstoff-Aerogel kann einen BET-Wert von 20-1500 m²/g, vorzugsweise von 100-1200 m²/g, besonders bevorzugt von 400-900 m²/g, haben.

Die Bestimmung der BET Oberfläche erfolgt nach DIN ISO 9277 (1995) in einem Sorptionsmessgerät NOVA e2000 der Firma QUANTACHROME. Als Sorptionsgas wird Stickstoff eingesetzt. Dabei werden die Proben vor der Bestimmung bei einer Temperatur von 350 °C und einem Druck von < 13,3 Pa für mehr als 12 Stunden ausgeheizt. Die Auswertung der Sorptionsisothermen zur Bestimmung der BET-Oberfläche erfolgt im relativen Druckbereich p/p₀ von 0,01 bis 0,1.

Das erfindungsgemäße Kohlenstoff-Aerogel kann ein Mesoporenvolumen von 0,005 - 5 cm³/g, vorzugsweise von 0,05 - 3 cm³/g, besonders bevorzugt von 0,2 - 2 cm³/g, haben.

Das erfindungsgemäße Kohlenstoff-Aerogel kann einen mittleren Mesoporendurchmesser von 1,8 - 50 nm, vorzugsweise von 5 - 45 nm, besonders bevorzugt von 10 - 35 nm, haben.

Die Bestimmung des Mesoporenvolumens und der Porenradienverteilung erfolgt gemäß DIN 66134 (1998) nach der BJH-Methode aus den Desorptionsdaten der aufgenommenen Isothermen im relativen Druckbereich p/p₀ von 0,99 bis 0,34.

Ferner kann das erfindungsgemäße Kohlenstoff-Aerogel ein Mikroporenvolumen von 0,01- 1,0 cm³/g, vorzugsweise von 0,05 - 0,5 cm³/g, besonders bevorzugt von 0,1 - 0,35 cm³/g, haben.

Die Bestimmung des Mikroporenvolumens erfolgt nach DIN 66135-1, 66135-2, 66135-3 (2001) nach dem t-plot-Verfahren. Die Auswertung des t-plots erfolgt dabei nach der Gleichung von de Boer.

Das erfindungsgemäße Kohlenstoff-Aerogel kann einen Gehalt an flüchtigen Bestandteilen von < 15,0 Gew.-%, vorzugsweise von < 5,0 Gew.-%, besonders bevorzugt von < 1,5 Gew.-%, ganz besonders bevorzugt von < 0,5 Gew.-%, haben.

Die Bestimmung der flüchtigen Bestandteile > 950 °C erfolgt in Anlehnung an DIN 53552 (1977). Hierzu wird die Probe zunächst bei 105 °C im Trockenschrank bis zur Gewichtskonstanz getrocknet und im Exsikkator abgekühlt. Anschließend wird die Probe, abweichend zur DIN 53552, in einen Quarztiegel (13 ml) gefüllt und mit einem Deckel, der mittig ein Loch von ca. 2 mm besitzt, abgedeckt. Im Muffelofen wird schließlich für 7 min auf 950 °C erhitzt. Die Abkühlung erfolgt wiederum im Exsikkator. Die flüchtigen Anteile ergeben sich aus dem Gewichtsverlust.

Das erfindungsgemäße Kohlenstoff-Aerogel kann einen My-Wert von 200-400, vorzugsweise von 250-390, besonders bevorzugt von 260-380, haben.

Der My Wert wird bestimmt, indem das Kohlenstoff-Aerogel bei 105 °C bis zur Gewichtskonstanz getrocknet und anschließend im Exsikkator abgekühlt wird.
1,3 g des getrockneten Kohlenstoff-Aerogels werden in einen Becher mit Schraubdeckel (PTFE, 240 ml Volumen) eingewogen. 27,3 g Komponente A, bestehend aus 77 Gew.-% Alkydal F3100 (60%) (Firma Bayer) und 23 Gew.-% Verdünner (zusammengesetzt aus 68,2 Gew.-% Xylol, 13,6 Gew.-% Ethoxypropanol, 9,1 Gew.-% Butanol, 4,6 Gew.-% Butylglycol und 4,5 Gew.-% Baysilon (10 Gew.-% Baysilon OL 17 (Firma Bayer) und 90 Gew.-% Xylol)) und 12,7 g Komponente B (77 Gew.-% Maprenal MF 800 (55%) (Firma Ineos) und 23 Gew.-% Verdünner (zusammengesetzt wie in Komponente A)) werden dazugewogen. 275 g Stahlperlen (Chromanite, Ø = 3 mm) werden zugefügt und der Deckel aufgeschraubt.
Die Mischung wird für 30 min in einem luftgekühlten Schüttelmischer (Skandex Mischer BAS 20K (Firma Lau)) geschüttelt. Die so hergestellte Mischung wird als Schwarzpaste bezeichnet.
Eine 90 µm dicke Schicht der Schwarzpaste wird mit Hilfe eines Rakels auf eine saubere, entfettete Glasplatte (OT geschnitten, AA09013002EA0MNZ, Firma Gerhard Menzel Glasbearbeitungswerk GmbH & Co KG) mit entfetteter Oberfläche aufgetragen und nach dem Ablüften bei 130 °C innerhalb von 30 min in einem Umluftofen eingebrannt.
Nach dem Abkühlen erfolgt die Farbmessung gemäß DIN 55 979 (1989) durch Glas.

Das erfindungsgemäße Kohlenstoff-Aerogel kann einen Gy-Wert von 50-130, vorzugsweise von 60-130, besonders bevorzugt von 70-130, haben.

Der Gy-Wert wird bestimmt, indem 60 g Stahlperlen (Chromanite, Ø = 3 mm), 62,9 g Weißpaste (GX Pigmentpaste weiß, Firma BASF), 2,3 g Härter (Luwipal 012 (Firma BASF)) und 16,0 g der Schwarzpaste aus der My-Bestimmung zusammen in einen Becher mit Schraubdeckel (PTFE, 240 ml Volumen) eingewogen und angemischt werden. Der Becher wird verschlossen und die Mischung für 30 min in einem luftgekühlten Schüttelmischer (Skandex Mischer BAS 20K (Firma Lau)) geschüttelt.
Die Farbpaste wird innerhalb von 10 min weiterverarbeitet, um ein Ausschwimmen zu vermeiden. Dazu wird eine 90 µm dicke Lackschicht mit einem Rakel auf eine saubere, entfettete Glasplatte (OT geschnitten, AA09013002EA0MNZ, Firma Gerhard Menzel Glasbearbeitungswerk GmbH & Co KG) aufgebracht und nach dem Ablüften bei 130 °C innerhalb von 30 min in einem Umluftofen eingebrannt.
Nach dem Abkühlen erfolgt die Farbmessung gemäß DIN 55 979 durch Glas.

Das erfindungsgemäße Kohlenstoff-Aerogel kann einen Kohlenstoff-Gehalt von 85-100 Gew.-%, vorzugsweise von 95-100 Gew.-%, besonders bevorzugt von 98-100 Gew.-%, ganz besonders bevorzugt von 99-100 Gew.-%, haben.

Das erfindungsgemäße Kohlenstoff-Aerogel kann einen elektrischen Oberflächenwiderstand von 1 kOhm bis 1 TOhm haben.

Der elektrische Oberflächenwiderstand wird an den Lackplatten für die My Bestimmung gemessen. Die Lackplatten werden vor der Messung bei 23 °C und 54 % relativer Luftfeuchtigkeit für 24 Stunden gelagert. Die Messung erfolgt bei 23 °C und 23 % relativer Luftfeuchtigkeit mit einem Megaohmmeter M 1500 P (Firma Sefelec). Die Messung erfolgt für 60 s bei einer Spannung von 500 V mittels zwei Elektroden einer Auflagefläche von jeweils 5 x 30 mm, welche mit 275 g Anpressgewicht belastet sind. Zwischen den beiden Elektroden befindet sich somit eine Fläche von 30 x 30 mm.

Das erfindungsgemäße Kohlenstoff-Aerogel (erste anorganische Phase) kann eine zweite anorganische Phase enthalten. Die zweite anorganische Phase kann innerhalb des Kohlenstoff-Aerogels und/oder auf der Oberfläche verteilt sein. Der Anteil der zweiten anorganischen Phase im Kohlenstoff-Aerogel bezogen auf das Gesamtgewicht kann von 0,001 - 0,8 Gew.-Teile, vorzugsweise von 0,01 - 0,5 Gew.-Teile, besonders bevorzugt von 0,03 - 0,4 Gew.-Teile, variieren.

Die zweite anorganische Phase kann nanostrukturiert sein.

Die zweite anorganische Phase kann Metallelemente und/oder -ionen, beispielsweise Silicium, Gold, Silber, Platin, Palladium, Ruthenium, Rhodium, Iridium, Nickel, Kobalt, Eisen, Kupfer, Zink sowie Mischungen der vorgenannten Stoffe, und/oder Nichtmetallelemente, beispielsweise Ruß, Kohlenstoff-Aerogele, Carbon Nanotubes, Carbon Nanorods, Graphit sowie graphitische Strukturen sowie Mischungen der vorgenannten Stoffe, enthalten.

Ein weiterer Gegenstand der Erfindung ist ein Verfahren zur Herstellung der erfindungsgemäßen Kohlenstoff-Aerogele, welches dadurch gekennzeichnet ist, dass man
(A) ein Mono- und/oder Polyhydroxybenzol, ein Aldehyd und ein Katalysator in einem Reaktor bei einer Reaktionstemperatur T im Bereich von 75 - 200 °C, vorzugsweise im Bereich von 80 - 150 °C, besonders bevorzugt im Bereich von 95 - 135 °C, bei einem Druck von 80 - 2400 kPa, vorzugsweise von 100 - 700 kPa, besonders bevorzugt von 125 - 500 kPa, zur Reaktion bringt,
(B) anschließend das Reaktionsgemisch aus Verfahrensschritt (A) in eine Säure einsprüht,
(C) das resultierende Produkt aus Verfahrensschritt (B) trocknet und
(D) karbonisiert.

Das eingesetzte Polyhydroxybenzol im Verfahrensschritt (A) kann ein di- oder tri-Hydroxybenzol sein, wie zum Beispiel Katechol, Resorcinol, Phloroglucinol, Hydrochinon und Mischungen hieraus. Bevorzugt kann ein Monohydroxybenzol (Phenol) eingesetzt werden.

Der eingesetzte Aldehyd im Verfahrensschritt (A) kann Formaldehyd, Glyoxal, Glutaraldehyd, Furfural und Mischungen hieraus sein. Bevorzugt kann der eingesetzte Aldehyd im Verfahrensschritt (A) Formaldehyd sein. Die eingesetzten Aldehyde können auch als wässrige Lösung oder in einem Lösungsmittel vorliegen.

Ferner können Vorkondensate auf Basis von Mono- und/oder Polyhydroxybenzol und Aldehyd, wie zum Beispiel Resole und Novolak, eingesetzt werden.

Als Lösungsmittel können Wasser, Alkohole, Ketone und Mischungen der vorgenannten Stoffe eingesetzt werden.

Verfahrensschritt (A) kann ohne den Zusatz eines Porenformers durchgeführt werden.

Verfahrensschritt (A) kann unter Zusatz eines Porenformers durchgeführt werden.

Als Porenformer kann zum Beispiel Ethylenglykol, Polyethylenglykol, Butylenglykol, Diethylenglykol, Triethylenglykol, Gamma-Butyrolacton, Propylencarbonat, Dimethylformamid, Monoethanolamin oder N-Methyl-2-pyrrolidinon und Mischungen aus den vorgenannten Stoffen eingesetzt werden.

Der eingesetzte Katalysator kann eine Base, zum Beispiel ein Alkali- oder Erdalkali-Hydroxid, mit einer ausreichenden Löslichkkeit im Lösungsmittel sein. Hierfür können NaOH, KOH, Na₂CO₃, Li₂CO₃, K₂CO₃, NH₃ oder jede andere Base eingesetzt werden. Bevorzugt kann NaOH eingesetzt werden.

Die Konzentration an Mono- und/oder Polyhydroxybenzol und Aldehyd in der Reaktionsmischung kann 10 - 60 Gew.-%, vorzugsweise 20-40 Gew.-%, besonders bevorzugt 20-30 Gew.-%, betragen.

Das molare Verhältnis Mono- und/oder Polyhydroxybenzol zu Aldehyd kann von 1:1 bis 1:4, vorzugsweise von 1:2 bis 1:3, in der Reaktionsmischung des Verfahrensschrittes (A) betragen.

Das molare Verhältnis vom eingesetzten Mono- und/oder Polyhydroxybenzol zu NaOH kann von 0,1 bis 100, vorzugsweise von 0,5 bis 50, besonders bevorzugt von 0,7 bis 20, in der Reaktionsmischung des Verfahrensschrittes (A) betragen.

Der im Verfahrensschritt (A) vorzugsweise eingesetzte Aldehyd kann eine Lösung aus Formaldehyd, Wasser und Stabilisatoren, zum Beispiel Methanol, sein.

Der pH-Wert der Reaktionsmischung im Verfahrensschritt (A) kann von 8,5 bis 12, vorzugsweise von 9,0 bis 9,7, variieren.

Das Mischen der Ausgangsverbindungen im Verfahrensschritt (A) kann in einem separaten Behälter auch bei einer von der genannten Reaktionstemperatur T abweichenden Temperatur erfolgen.

Der im Verfahrensschritt (A) vorliegende Druck kann von außen angelegt, durch Temperaturerhöhung im geschlossenen System oder durch eine Kombination aus beiden erzeugt werden.

Die Reaktionszeit im Verfahrensschritt (A) kann nach Erreichen der Reaktionstemperatur T zwischen 0,001 und 1000000 s, vorzugsweise zwischen 1 und 36000 s, besonders bevorzugt zwischen 60 und 3600 s, betragen.

Die Reaktion im Verfahrensschritt (A) kann unter Rühren erfolgen.

Der Zeitpunkt des Versprühens des Reaktionsgemisches aus Verfahrensschritt (A) in die Säure im Verfahrensschritt (B) kann mit Lichttransmissionsmessungen festgelegt werden. Der Lichttransmissionswert zum Zeitpunkt des Versprühens kann bei einer Wellenlänge von 475 nm weniger als 80 %, vorzugsweise zwischen 0,01 % und 50 %, besonders bevorzugt zwischen 0,1 % und 40 %, der Ausgangstransmission betragen.

Die Messung der Lichttransmission kann in-situ mit dem Photometer E 616 (Firma Metrohm) erfolgen.

Die im Verfahrensschritt (B) eingesetzte Säure kann dabei sowohl als Lösung als auch als Gas vorliegen.

Die im Verfahrensschritt (B) eingesetzte Säure kann sowohl in konzentrierter Form als auch verdünnt vorliegen.

Die eingesetzte Säure im Verfahrensschritt (B) kann eine anorganische Säure, beispielsweise mineralische Säure, oder organische Säure sein. Die mineralische Säure kann Salzsäure, Salpetersäure, Phosphorsäure oder Schwefelsäure sein. Die organische Säure kann Essigsäure, Ameisensäure oder Oxalsäure sein.

Die eingesetzte Säure kann einen pH-Wert von kleiner 2,0, vorzugsweise 0,5 - 1,5, besonders bevorzugt 0,5 - 1,0, haben.

Die Menge an eingesetzter Säurelösung kann mindestens das 1-fache, vorzugsweise mindestens das 5-fache, des eingebrachten flüssigen Gemisches aus Verfahrensschritt (A) betragen.

Die Säurelösung aus Verfahrensschritt (B) kann eine Temperatur von 0 - 200 °C, vorzugsweise 10 - 90 °C, besonders bevorzugt von 15 - 50 °C, haben.

Die gasförmige Säure aus Verfahrensschritt (B) kann eine Temperatur von 10 - 300 °C, vorzugsweise 50 - 200 °C, besonders bevorzugt von 70 - 180 °C, haben.

Das Einsprühen des Reaktionsgemisches aus Verfahrensschritt (A) in die Säure kann mittels Düsen erfolgen.

Die Düsenöffnungen können von 0,01 bis 3 mm, vorzugsweise von 0,05 bis 2 mm, besonders bevorzugt von 0,1 bis 1,5 mm, sein.

Als Düsen können Ein- oder Mehrstoffdüsen eingesetzt werden.

Als Zerstäubermedium können gasförmige Stoffe, beispielsweise wie Luft, Stickstoff, CO₂, Argon und /oder dampf- bzw. gasförmige Säuren, wie HCl, eingesetzt werden.

Als Düsen können Vollkegel-, Hohlkegel-, Flachstrahl- und Glattstrahldüsen eingesetzt werden.

Das Einsprühen des Reaktionsgemisches aus Verfahrensschritt (A) in die Säure kann durch äußere Felder unterstützt werden.

Die äußeren Felder können elektrische oder akustische Felder, beispielweise Ultraschall, sein.

Das Einsprühen des Reaktionsgemisches aus Verfahrensschritt (A) in die Säure kann über Rotationszerstäuber, Vibrationszerstäuber oder Venturidüsen erfolgen.

Die im Verfahrensschritt (B) durch das Einsprühen erzeugte Tropfengröße kann von 50 nm bis 3 mm, bevorzugt von 100 nm bis 1 mm, besonders bevorzugt von 200 nm bis 0,5 mm, sein.

Die Verweilzeit in der Säure aus Verfahrensschritt (B) kann zwischen 0,01 und 100000 s, vorzugsweise zwischen 1 und 10000 s, besonders bevorzugt zwischen 10 und 5000 s, betragen.

Das resultierende Produkt des Verfahrensschrittes (B) kann eingedickt und anschließend getrocknet werden.

Die Eindickung des resultierenden Produkts aus Verfahrensschritt (B) kann mittels Zentrifugation, Sedimentation, Filtration oder thermisch erfolgen.

Die Trocknung in Verfahrensschritt (C) kann konvektiv, überkritisch, mittels Gefriertrocknung, InfrarotStrahlung, Mikrowellen-Strahlung oder als Kombination der vorgenannten Trocknungsverfahren erfolgen.

Bei Einsatz gasförmiger Säure im Verfahrensschritt (B) kann Verfahrensschritt (C) innerhalb des Verfahrensschrittes (B) durchgeführt werden.

Die Trocknungstemperatur bei der konvektiven Trocknung kann 10 - 300°C, vorzugsweise von 50 - 200°C, sein. Die Trocknungstemperatur bei der Gefriertrocknung kann -50 - 0°C, vorzugsweise -20 - 0°C, sein.

Die konvektive Trocknung kann als Sprühtrocknung durchgeführt werden.

Für die Sprühtrocknung kann das resultierende Produkt aus Verfahrensschritt (B) wahlweise auch ohne Eindickung eingesetzt werden. Die Sprühtrocknung kann bei einer Temperatur von 80 - 300°C, vorzugsweise von 80 - 250°C, durchgeführt werden.

Die Restfeuchte des Produktes aus Verfahrensschritt (C) bezogen auf den Massenanteil des Lösemittels im Reaktionsgemisch aus Verfahrensschritt (A) kann von 0 - 90 Gew.-%, vorzugsweise 10 - 80 Gew.-%, besonders bevorzugt 65 - 75 Gew.-%, sein. Die Bestimmung des Massenanteiles des Lösemittels erfolgt gravimetrisch.

Das aus Verfahrensschritt (C) erhaltene Produkt kann vor der weiteren Verarbeitung zerkleinert werden. Ein weiterer Trocknungsschritt kann sich anschließen.

Die Karbonisierung des Verfahrensschrittes (D) kann bei einer Temperatur von 500 - 1400 °C, vorzugsweise 600 - 900 °C, besonders bevorzugt 650 - 800 °C, durchgeführt werden. Die Karbonisierung kann unter Sauerstoffausschluss, beispielsweise unter Schutzgas, vorzugsweise Stickstoff oder Argon, oder im Vakuum, erfolgen. Die Karbonisierung kann mittels Infrarot, Mikrowelle, Plasma, elektrischer oder thermischer Heizung erfolgen.

Das erfindungsgemäße Verfahren kann kontinuierlich oder batchweise durchgeführt werden.

Das aus Verfahrensschritt (D) erhaltene Kohlenstoff-Aerogel kann in einem nachfolgenden Schritt nachbehandelt, beispielweise oxidiert und/oder aktiviert, werden.

Die Nachbehandlung kann physikalisch und/oder chemisch erfolgen.

Das aus Verfahrensschritt (D) erhaltene und gegebenenfalls nachbehandelte Kohlenstoff-Aerogel kann zur besseren Handhabung granuliert werden.

Das granulierte Kohlenstoff-Aerogel kann nass-, trocken-, öl- und/oder wachsgranuliert sein.

Als Granulationsflüssigkeit können Wasser, Silane oder Kohlenwasserstoffe, beispielsweise Benzin oder Cyclohexan, mit oder ohne Zugabe von Bindemitteln, beispielsweise Melasse, Zucker, Ligninsulfonate sowie zahlreiche andere Stoffe alleine oder in Kombination miteinander, eingesetzt werden.

Die erfindungsgemäßen Kohlenstoff-Aerogele können unter anderem als Füllstoff, Verstärkerfüllstoff, UV-Stabilisator, Elektrodenmaterial, Schallabsorber, thermisches Isolationsmaterial, Katalysator, Katalysatorträger, Leitfähigkeitszusatz, Absorber für Gas- und/oder Flüssigkeitsaufbereitung oder Pigment verwendet werden.

Die erfindungsgemäßen Kohlenstoff-Aerogele können unter anderem in Kautschuk, Kunststoff, Kunststoffdispersionen, Klebstoffen, Druckfarben, Tinten, Inkjet-Tinten, Tonern, Lacken, Batterien, Brennstoffzellen, Keramik, Farben, Papier, Bitumen, Beton und anderen Baustoffen eingesetzt werden. Die erfindungsgemäßen Kohlenstoff-Aerogele können auch als Reduktionsmittel in der Metallurgie angewendet werden.

Ein weiterer Gegenstand der Erfindung ist ein Lack, welcher dadurch gekennzeichnet ist, dass dieser das erfindungsgemäße Kohlenstoff-Aerogel enthält.

Das erfindungsgemäße Kohlenstoff-Aerogel kann von 0,1 bis 30 Gew.-%, vorzugsweise 0,5 bis 10 Gew.-%, in dem Lack enthalten sein.

Ein weiterer Gegenstand der Erfindung ist eine Kunststoffmischung, welche dadurch gekennzeichnet ist, dass diese das erfindungsgemäße Kohlenstoff-Aerogel enthält.

Das erfindungsgemäße Kohlenstoff-Aerogel kann von 0,1 bis 30 Gew.-%, vorzugsweise 0,5 bis 10 Gew.-%, in der Kunststoffmischung enthalten sein.

Ein weiterer Gegenstand der Erfindung ist eine Druckfarbe, welche dadurch gekennzeichnet ist, dass diese das erfindungsgemäße Kohlenstoff-Aerogel enthält.

Das erfindungsgemäße Kohlenstoff-Aerogel kann von 0,1 bis 50 Gew.-%, vorzugsweise 0,5 bis 40 Gew.-%, in der Druckfarbe enthalten sein.

Ein weiterer Gegenstand der Erfindung ist eine Tinte, welche dadurch gekennzeichnet ist, dass diese das erfindungsgemäße Kohlenstoff-Aerogel enthält.

Das erfindungsgemäße Kohlenstoff-Aerogel kann von 0,1 bis 50 Gew.-%, vorzugsweise 0,5 bis 40 Gew.-%, in der Tinte enthalten sein.

Ein weiterer Gegenstand der Erfindung ist eine Kautschukmischung, welche dadurch gekennzeichnet ist, dass diese das erfindungsgemäße Kohlenstoff-Aerogel enthält.

Das erfindungsgemäße Kohlenstoff-Aerogel kann von 0,1 - 200 Gewichtsteile, vorzugsweise 5 - 150 Gewichtsteile, bezogen auf den Kautschuk in der Kautschukmischung enthalten sein.

Die erfindungsgemäßen Kohlenstoff-Aerogele haben den Vorteil, dass aufgrund der Feinteiligkeit die Dispergierbarkeit verbessert ist gegenüber den aus dem Stand der Technik bekannten Kohlenstoff-Aerogelen.

Das erfindungsgemäße Verfahren hat den Vorteil, dass bei dem erfindungsgemäßen Verfahren direkt ein feinteiliges Produkt erhalten wird.

### Beispiel 1 (Vergleichsbeispiel, Barral, Journal of Non-Crystalline Solids, Vol. 225, S. 47 (double step process), 1998)

0,68 g Phluoroglucinol wird in 101,6 g Wasser bei Raumtemperatur gelöst. Der Lösung wird 0,32 g 37 %-iger Formaldehydlösung zugegeben. Anschließend werden 0,02 g Calciumhydroxid zugegeben. Ein geschlossenes Glasgefäß mit der Lösung wird in einem Silikonölbad von 90°C ohne Rührung erwärmt. Nach einer 5 minütigen Verweilzeit im Silikonölbad wird die noch flüssige Lösung auf Raumtemperatur abgekühlt. Anschließend erfolgt die Zugabe von 0,128 g 37%-iger HCl-Lösung. Die resultierende Lösung wird für 72 h bei einer Temperatur von 92 °C gehalten. Das resultierende organische Gel wird bei Raumtemperatur getrocknet und anschließend in einem Muffelofen bei 800°C unter Stickstoff 1,5 Stunden karbonisiert. Das erhaltene Kohlenstoffsystem hat eine Partikelgrößenverteilung mit x₅₀ = 1,07 µm (mittlere Partikelgröße) und x₉₅ = 3,09 µm. Das Kohlenstoff-Aerogel hat eine spezifische Oberfläche von 233,5 m²/g und ein Mesoporenvolumen von 0,008 cm³/g.

### Beispiel 2 (Vergleichbeispiel, WO 02/12380 A2, Beispiel 1-2)

Das im Patent WO 02/12380 A2 erwähnte Beispiel 1-2 wird entsprechend der Beschreibung nachgestellt.

Das erhaltene Kohlenstoffsystem hat eine Partikelgrößenverteilung, die mittels der angegebenen Messmethode nicht vollständig charakterisiert werden kann (x₉₅ > 3,0 mm). Das Kohlenstoff-Aerogel hat eine spezifische Oberfläche von 535,2 m²/g und ein Mesoporenvolumen von 0,459 cm³/g. Der My-Wert dieses Kohlenstoff-Aerogels beträgt 226,9.

### Beispiel 3

4,5 g Phenol wird in 19,5 g Wasser bei Raumtemperatur gelöst. Der Lösung wird 11,77 g 37 %-iger Formaldehydlösung zugegeben. Anschließend wird die Lösung mit 0,73 g 25 %-iger Natronlauge auf den pH-Wert von 9,1 eingestellt. Ein geschlossenes Glasgefäß mit der Lösung wird in einem Silikonölbad von 90°C ohne Rührung erwärmt. Nach einer achtstündigen Verweilzeit im Silikonölbad wird die noch flüssige Lösung durch eine Schlick Hohlkegeldüse Modell 121 V, Typ 8 (0,8 mm Bohrung) mit einem Druck von 2,5 bar in ein zehnfaches Volumen der HCl-Lösung mit dem pH = 1,0 eingedüst. Die Säurelösung mit dem organischen feinpartikulären Bodensatz wird nach 20 Stunden Verweilzeit bei Raumtemperatur in einem Sprühtrockner bei 160 °C getrocknet. Das trockene Gel wird in einem Muffelofen bei 800°C unter Stickstoff 1,5 Stunden karbonisiert. Das erhaltene feinpartikuläre Kohlenstoffsystem hat eine Partikelgrößenverteilung mit x₅₀ = 316 nm (mittlere Partikelgröße)und x₉₅ < 512 nm. Das Kohlenstoff-Aerogel hat eine spezifische Oberfläche von 613,3 m²/g und ein Mesoporenvolumen von 0,044 cm³/g. Der My-Wert dieses Kohlenstoff-Aerogels beträgt 239,0. Der My-Wert ist höher als im Beispiel 2 (Vergleichsbeispiel) und zeigt damit eine bessere Dispergierbarkeit an.

### Beispiel 4

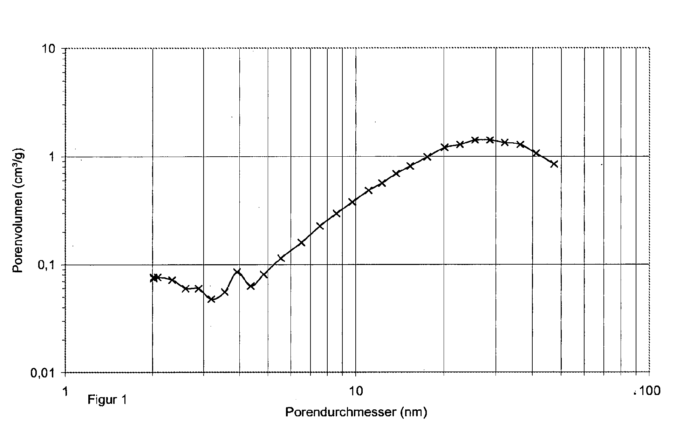

1,9 g Phenol (P) wird in 11,52 g Wasser bei Raumtemperatur gelöst. Der Lösung wird 4,97 g 37 %-iger Formaldehyd-(F)-lösung zugegeben. Anschließend wird die Lösung mit 0,31 g 25 %-iger Natronlauge auf den pH-Wert von 9,1 gestellt. Ein geschlossenes Gefäß mit der Lösung wird in einem Silikonölbad von 85°C ohne Rührung erwärmt. Nach einer zehnstündigen Verweilzeit im Silikonölbad wird die noch flüssige Lösung durch eine Schlick Hohlkegeldüse Modell 121 V, Typ 8 (0,8 mm Bohrung) mit einem Druck von 2,5 bar in ein zehnfaches Volumen der Oxalsäurelösung mit pH = 0,95, die eine Temperatur von 85°C hat, eingedüst. Die Säurelösung mit dem gebildeten organischen feinpartikulären Bodensatz wird bei 85 °C in einem ebenfalls geschlossenen Gefäß aufbewahrt. Nach 90 Stunden wird die Säurelösung mit dem feinpartikulären Bodensatz in einem Sprühtrockner bei 160 °C getrocknet. Das getrocknete Gel wird in einem Muffelofen bei 800°C unter Stickstoff 1,5 Stunden karbonisiert. Das erhaltene feinpartikuläre Kohlenstoffsystem hat eine Partikelgrößenverteilung mit x₅₀ = 495 nm (mittlere Partikelgröße)und x₉₅ = 917 nm. Das Kohlenstoff-Aerogel hat eine spezifische Oberfläche von 734,8 m²/g und ein Mesoporenvolumen von 1,07 cm³/g. Die Mesoporenverteilung ist in der Figur 1 dargestellt. Der My-Wert dieses Kohlenstoff-Aerogels beträgt 285,7. Der My-Wert ist höher als im Beispiel 2 (Vergleichsbeispiel) und zeigt damit eine bessere Dispergierbarkeit an.

### Beispiel 5

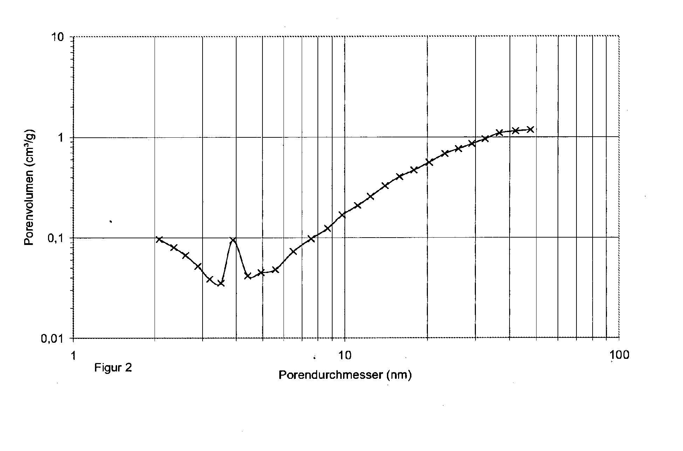

1,9 g Phenol wird in 11,52 g Wasser bei Raumtemperatur gelöst. Der Lösung wird 4,97 g 37 %-iger Formaldehydlösung zugegeben. Anschließend wird die Lösung mit 0,31 g 25 %-iger Natronlauge auf den pH-Wert von 9,1 gestellt. Ein geschlossenes Gefäß mit der Lösung wird in einem Silikonölbad von 85°C ohne Rührung erwärmt. Nach einer zehnstündigen Verweilzeit im Silikonölbad wird die noch flüssige Lösung durch eine Schlick Hohlkegeldüse Modell 121 V, Typ 8 (0,8 mm Bohrung) mit einem Druck von 2,5 bar in ein zehnfaches Volumen der Ameisensäurelösung mit pH = 0,95, die eine Temperatur von 85°C hat, eingedüst. Die Säurelösung mit dem gebildeten organischen feinpartikulären Bodensatz wird bei 85 °C in einem ebenfalls geschlossenen Gefäß aufbewahrt. Nach 90 Stunden wird die Säurelösung mit dem feinpartikulären Bodensatz in einem Sprühtrockner bei 160 °C getrocknet. Das getrocknete Gel wird in einem Muffelofen bei 800°C unter Stickstoff 1,5 Stunden karbonisiert. Das erhaltene feinpartikuläre Kohlenstoffsystem hat eine Partikelgrößenverteilung mit x₅₀ = 770 nm (mittlere Partikelgröße)und x₉₅ = 1916 nm. Das Kohlenstoff-Aerogel hat eine spezifische Oberfläche von 699,9 m²/g und ein Mesoporenvolumen von 0,85 cm³/g. Die Mesoporenverteilung ist in der Figur 2 dargestellt. Der My-Wert dieses Kohlenstoff-Aerogels beträgt 272,7. Der My-Wert ist höher als im Beispiel 2 (Vergleichsbeispiel) und zeigt damit eine bessere Dispergierbarkeit an.

### Beispiel 6

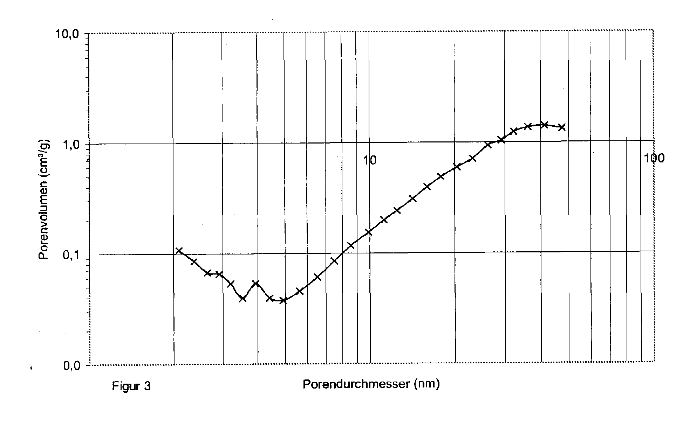

1,9 g Phenol wird in 11,52 g Wasser bei Raumtemperatur gelöst. Der Lösung wird 4,97 g 37 %-iger Formaldehydlösung zugegeben. Anschließend wird die Lösung mit 0,31 g 25 %-iger Natronlauge auf den pH-Wert von 9,1 gestellt. Ein geschlossenes Gefäß mit der Lösung wird in einem Silikonölbad von 125°C ohne Rührung erwärmt. Das Innenvolumen des Gefäßes wird mit dem Druck von 4,5 bar (absolut) beaufschlagt. Nach einer achtzehnminütigen Verweilzeit im Silikonölbad wird die noch flüssige Lösung durch eine Schlick Hohlkegeldüse Modell 121 V, Typ 8 (0,8 mm Bohrung) mit einem Druck von 2,5 bar in ein zehnfaches Volumen der HCl mit pH = 0,95, die eine Temperatur von 25°C hat, eingedüst. Die Säurelösung mit dem gebildeten organischen feinpartikulären Bodensatz wird bei 25 °C in einem ebenfalls geschlossenen Gefäß aufbewahrt. Nach 24 Stunden wird die Säurelösung mit dem feinpartikulären Bodensatz in einem Sprühtrockner bei 200 °C getrocknet. Das getrocknete Gel wird in einem Muffelofen bei 800°C unter Stickstoff 1,5 Stunden karbonisiert. Das erhaltene feinpartikuläre Kohlenstoffsystem hat eine Partikelgrößenverteilung mit x₅₀ = 810 nm (mittlere Partikelgröße)und x₉₅ = 1956 nm. Das Kohlenstoff-Aerogel hat eine spezifische Oberfläche von 700,0 m²/g und ein Mesoporenvolumen von 1,03 cm³/g. Die Mesoporenverteilung ist in der Figur 3 dargestellt. Der M_{y}-Wert dieses Kohlenstoff-Aerogels beträgt 276,3. Der M_{y}-Wert ist höher als im Beispiel 2 (Vergleichsbeispiel) und zeigt damit eine bessere Dispergierbarkeit an.

### Beispiel 7

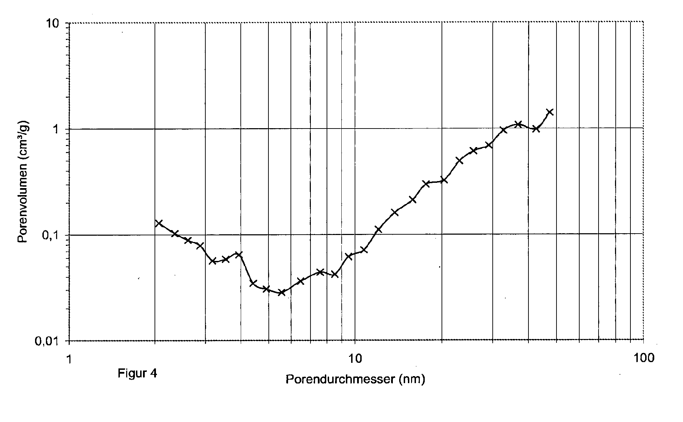

3,8 g Phenol wird in 23,00 g Wasser bei Raumtemperatur gelöst. Der Lösung wird 9,84 g 37 %-iger Formaldehydlösung zugegeben. Anschließend wird die Lösung mit 0,62 g 25 %-iger Natronlauge auf den pH-Wert von 9,1 gestellt. Ein geschlossenes Gefäß mit der Lösung wird in einem Silikonölbad von 125°C ohne Rührung erwärmt. Das Innenvolumen des Gefäßes wird mit dem Druck von 4,5 bar (absolut) beaufschlagt. Nach einer neunzehnminütigen Verweilzeit im Silikonölbad wird die noch flüssige Lösung durch eine Schlick Hohlkegeldüse Modell 121 V, Typ 8 (0,8 mm Bohrung) mit einem Druck von 2,5 bar in ein zehnfaches Volumen der HCl mit pH = 1,01, die eine Temperatur von 25°C hat, eingedüst. Die Säurelösung mit dem gebildeten organischen feinpartikulären Bodensatz wird bei 25 °C in einem ebenfalls geschlossenen Gefäß aufbewahrt. Nach 24 Stunden wird die Säurelösung mit dem feinpartikulären Bodensatz in einem Sprühtrockner bei 220 °C getrocknet. Das getrocknete Gel wird in einem Muffelofen bei 800°C unter Stickstoff 1,5 Stunden karbonisiert. Das erhaltene feinpartikuläre Kohlenstoffsystem hat eine Partikelgrößenverteilung mit x₅₀ = 830 nm (mittlere Partikelgröße)und x₉₅ = 1990 nm. Das Kohlenstoff-Aerogel hat eine spezifische Oberfläche von 689,9 m²/g und ein Mesoporenvolumen von 0,91 cm³/g. Die Mesoporenverteilung ist in der Figur 4 dargestellt. Der M_{y}-Wert dieses Kohlenstoff-Aerogels beträgt 274,2. Der M_{y}-Wert ist höher als im Beispiel 2 (Vergleichsbeispiel) und zeigt damit eine bessere Dispergierbarkeit an.

## Patentansprüche

1. Kohlenstoff-Aerogel, **dadurch gekennzeichnet, dass** die mittlere Partikelgröße kleiner 1 µm ist.

2. Kohlenstoff-Aerogel gemäß Anspruch 1, **dadurch gekennzeichnet, dass** die Dichte 0,005 - 2,0 g/cm³ ist.

3. Verfahren zur Herstellung der Kohlenstoff-Aerogele gemäß Anspruch 1, **dadurch gekennzeichnet, dass** man
(A) ein Mono- und/oder Polyhydroxybenzol, ein Aldehyd und ein Katalysator in einem Reaktor bei einer Reaktionstemperatur T im Bereich von 75 - 200 °C bei einem Druck von 80 - 2400 kPa zur Reaktion bringt,
(B) anschließend das Reaktionsgemisch aus Verfahrensschritt (A) in eine Säure einsprüht,
(C) das resultierende Produkt aus Verfahrensschritt (B) trocknet und
(D) karbonisiert.

4. Verwendung der Kohlenstoff-Aerogel gemäß Anspruch 1 als Füllstoff, Verstärkerfüllstoff, UV-Stabilisator, Elektrodenmaterial, Schallabsorber, thermisches Isolationsmaterial, Katalysator, Katalysatorträger, Leitfähigkeitszusatz, Absorber für Gas- und/oder Flüssigkeitsaufbereitung oder Pigment.

5. Verwendung der Kohlenstoff-Aerogel gemäß Anspruch 1 in Kautschuk, Kunststoff, Kunststoffdispersionen, Klebstoffen, Druckfarben, Tinten, Inkjet-Tinten, Tonern, Lacken, Batterien, Brennstoffzellen, Keramik, Farben, Papier, Bitumen, Beton und anderen Baustoffen.

6. Lack, **dadurch gekennzeichnet, dass** dieser das Kohlenstoff-Aerogel gemäß Anspruch 1 enthält.

7. Kunststoffmischung, **dadurch gekennzeichnet, dass** diese das Kohlenstoff-Aerogel gemäß Anspruch 1 enthält.

8. Druckfarbe, **dadurch gekennzeichnet, dass** diese das Kohlenstoff-Aerogel gemäß Anspruch 1 enthält.

9. Tinte, **dadurch gekennzeichnet, dass** diese das Kohlenstoff-Aerogel gemäß Anspruch 1 enthält.

10. Kautschukmischung, **dadurch gekennzeichnet, dass** diese das Kohlenstoff-Aerogel gemäß Anspruch 1 enthält.

## Claims

1. Carbon aerogel, **characterized in that** the mean particle size is less than 1 µm.

2. Carbon aerogel according to Claim 1, **characterized in that** the density is 0.005 - 2.0 g/cm³.

3. Process for producing the carbon aerogels according to Claim 1, **characterized in that**
(A) a mono- and/or polyhydroxybenzene, an aldehyde and a catalyst are reacted in a reactor at a reaction temperature T in the range of 75 - 200°C at a pressure of 80 -2400 kPa,
(B) then the reaction mixture from process step (A) is sprayed into an acid,
(C) the resulting product from process step (B) is dried and
(D) carbonized.

4. Use of the carbon aerogel according to Claim 1 as a filler, reinforcing filler, UV stabilizer, electrode material, sound absorber, thermal insulation material, catalyst, catalyst support, conductivity additive, absorber for gas and/or liquid formulations or pigment.

5. Use of the carbon aerogel according to Claim 1 in rubber, plastic, plastics dispersions, adhesives, printing inks, inks, inkjet inks, toners, coatings, batteries, fuel cells, ceramic, dyes, paper, bitumen, concrete and other building materials.

6. Coating, **characterized in that** it comprises the carbon aerogel according to Claim 1.

7. Plastics mixture, **characterized in that** it comprises the carbon aerogel according to Claim 1.

8. Printing ink, **characterized in that** it comprises the carbon aerogel according to Claim 1.

9. Ink, **characterized in that** it comprises the carbon aerogel according to Claim 1.

10. Rubber mixture, **characterized in that** it comprises the carbon aerogel according to Claim 1.

## Revendications

1. Aérogel au carbone, **caractérisé en ce que** la taille moyenne des particules est inférieure à 1 µm.

2. Aérogel au carbone selon la revendication 1, **caractérisé en ce que** la densité est de 0,005 à 2,0 g/cm³.

3. Procédé de fabrication d'aérogels au carbone selon la revendication 1, **caractérisé en ce que** l'on
(A) fait réagir un mono- et/ou polyhydroxybenzène, un aldéhyde et un catalyseur dans un réacteur à une température de réaction T située dans la plage de 75 à 200°C à une pression de 80 à 2400 kPa,
(B) injecte ensuite le mélange réactionnel provenant de l'étape de procédé (A) dans un acide,
(C) sèche le produit résultant provenant de l'étape de procédé (B) et
(D) carbonise.

4. Utilisation des aérogels au carbone selon la revendication 1, comme charge, charge de renforcement, stabilisateur d'UV, matériau d'électrode, absorbeur de bruits, matériau d'isolation thermique, catalyseur, support catalytique, additif de conductivité, absorbeur pour le traitement des gaz et/ou des fluides ou pigment.

5. Utilisation des aérogels au carbone selon la revendication 1 dans le caoutchouc, le plastique, les dispersions de plastique, les adhésifs, les couleurs d'impression, les encres, les encres pour jet d'encre, les toners, les laques, les piles, les piles à combustible, la céramique, les peintures, le papier, les bitumes, le béton et autres matériaux de construction.

6. Laque, **caractérisée en ce que** celle-ci contient l'aérogel au carbone selon la revendication 1.

7. Mélange de plastiques, **caractérisé en ce que** celui-ci comprend l'aérogel au carbone selon la revendication 1.

8. Couleur d'impression, **caractérisée en ce que** celle-ci comprend l'aérogel au carbone selon la revendication 1.

9. Encre, **caractérisée en ce que** celle-ci comprend l'aérogel au carbone selon la revendication 1.

10. Mélange de plastiques, **caractérisé en ce que** celui-ci comprend l'aérogel au carbone selon la revendication 1.
